# EUROPÄISCHE PATENTSCHRIFT

(11) **EP 0 606 603 B1**
(45) Veröffentlichungstag und Bekanntmachung des Hinweises auf die Patenterteilung: **19.06.1996**
(21) Anmeldenummer: 93120240.2
(22) Anmeldetag: 16.12.1993
(51) Int. Cl.: A62B 9/02, F16K 1/44, F16K 39/02

(54) **Ventil mit Druckkompensation**
Valve with pressure compensation
Soupape avec compensation de pression

(30) Priorität: 13.01.1993 DE 4300629
(43) Veröffentlichungstag der Anmeldung: 20.07.1994
(73) Patentinhaber: DRÄGERWERK AKTIENGESELLSCHAFT, D-23558 Lübeck (DE)
(72) Erfinder: Krüger, Edmund, D-23566 Lübeck (DE)

(56) Entgegenhaltungen:
- CH-A- 466 051
- DE-B- 1 159 715
- DE-B- 1 252 027
- DE-U- 8 425 137
- GB-A- 2 029 552
- US-A- 3 495 623
- US-A- 5 067 521

## Beschreibung

Die Erfindung betrifft ein Ventil mit Druckkompensation, über zwei an einer Verbindungsstange gleichsinnig angeordnete Ventilkörper in einem Ventilgehäuse, mit Ausgangsöffnungen im Ventilgehäuse und flanschartigen Ventilsitzen an den Ausgangsöffnungen, auf welchen die Ventilkörper in gleicher Richtung in Schließstellung über Verformungszonen aufliegen und mit einem von den Ventilkörpern und der Innenfläche des Ventilgehäuses umschlossenen Druckraum.

Ein Ventil der genannten Art ist aus dem DE-U 84 25 137 bekanntgeworden. Das bekannte Ventil besitzt in einem Ventilgehäuse an einer Verbindungsstange gleichsinning angeordnete Ventilkörper, welche in Schließstellung in gleicher Richtung auf flanschartigen Ventilsitzen im Ventilgehäuse aufliegen. Zwischen den Ventilsitzen und den Ventilkörpern sind elastomere Dichtringe vorgesehen, welche die vom Innenraum des Ventilgehäuses über die Ventilsitze zur Außenseite führenden Strömungskanäle in der jeweiligen Schließstellung der Ventilkörper abdichten.

Nachteilig bei dem bekannten Ventil ist, daß Toleranzen der Doppelpassung zwischen den Ventilkörpern und den zugehörigen Ventilsitzen in der Schließstellung nur teilweise über die Elastizität der Dichtringe ausgeglichen werden können. Aufgrund der starren Kopplung der Ventilkörper über die Verbindungsstange kann es vorkommen, daß zwar ein Ventilkörper an seinem zugehörigen Ventilsitz anliegt, sich zwischen dem anderen Ventilkörper und dem Ventilsitz aber ein Leckagefluß einstellt. Dieser Leckagefluß kann nur über eine entsprechend hohe, auf die Ventilkörper wirkende Schließkraft abgestellt werden.

Aus der CH-A-466 051 ist ein Lungenautomat mit einem Dosierventil bekanntgeworden, welches in einem Ventilgehäuse einen Ventilkörper auf einem Ventilsitz und einen mit dem Ventilkörper starr verbundenen Kompensationskolben zur Vordruckkompensation besitzt. Ein Steuerhebel, der an einer Steuermembran des Lungenautomaten anliegt, ist gelenkig im Ventilgehäuse gelagert und betätigt bei einer Auslenkung der Steuermembran den Kompensationskolben und den Ventilkörper, wodurch Druckgas in den von der Steuermembran und dem Innenraum des Ventilgehäuses gebildeten Steuermembranraum fließen kann.

Nachteilig bei dem bekannten Dosierventil ist, daß bei der Betätigung des Kompensationskolbens eine nicht unerhebliche Haftreibung überwunden werden muß, da dieser mit einer O-Ring-Abdichtung axial verschiebbar in einer Bohrung des Ventilgehäuses aufgenommen ist. Die Haftreibung hat eine verminderte Ansprechempfindlichkeit des Lungenautomaten zur Folge. Zwar wäre eine gewisse Kompensation der Haftreibung durch eine größere Steuermembran möglich, jedoch wird dadurch die Handhabbarkeit des Lungenautomaten erheblich eingeschränkt.

Der Erfindung liegt die Aufgabe zugrunde, ein Ventil der genannten Art derart zu verbessern, daß die Dichtigkeit zwischen den Ventilkörpern und den zugehörigen Ventilsitzen erhöht und die Schließkraft auf ein Mindestmaß reduziert ist.

Die Lösung der Aufgabe erfolgt dadurch, daß die zwischen oberem Ventilkörper und oberem Ventilsitz einerseits und unterem Ventilkörper und unterem Ventilsitz andererseits befindlichen Verformungszonen als der Schließkraft unterschiedlich nachgebende Druckstücke ausgeführt sind.

Der Vorteil der Erfindung besteht im wesentlichen darin, daß durch die unterschiedliche Nachgiebigkeit der die Verformungszonen bildenden Druckstücke zwischen den Ventilkörpern und Ventilsitzen das aufgrund der Doppelpassung entstehende Spiel kompensierbar und die Schließkraft deutlich reduziert ist. Unter Verformungszone ist jener Bereich zwischen Ventilkörper und Ventilsitz zu verstehen, in welchem beide in der Schließstellung formschlüssig zur Anlage kommen und welcher die Verformung zuläßt. Die Verformungszone zwischen Ventilsitz und Ventilkörper kann in der Weise ausgeführt sein, daß einmal nur der Ventilsitz, oder der Ventilkörper als zumindestens stückweise nachgiebig ausgeführt sind, oder sowohl der Ventilsitz und der Ventilkörper sind beide zumindestens stückweise nachgiebig ausgeführt, oder es befindet sich ein elastisches Dichtelement als Druckstück zwischen einem festen Ventilsitz und einem festen Ventilkörper. Auch sind Kombinationen vorstellbar zwischen nachgiebigem/festem Ventilsitz/Ventilkörper und einem elastischen Dichtelement. Eine unterschiedliche Nachgiebigkeit liegt vor, wenn bei gleicher Krafteinwirkung eines Ventilkörpers auf den zugehörigen Ventilsitz in der Schließstellung unterschiedliche Verschiebungen aufgrund elastischer oder plastischer Deformationen zwischen den jeweiligen Ventilkörpern und Ventilsitzen vorhanden sind. Die für die Dichtigkeit erforderliche Schließkraft kann beispielsweise durch eine Feder erzeugt werden, durch welche die Ventilkörper in der statischen Ruhelage gegen die zugehörigen Ventilsitze gedrückt werden.

Vorteilhafte Ausgestaltungen der Erfindung sind in den Unteransprüchen angegeben.

In zweckmäßiger Weise wird die unterschiedliche Nachgiebigkeit der Verformungszonen dadurch erreicht, daß einer der Ventilkörper als ein Elastomerkegel mit einer auf einem Wulst kragarmförmig befestigten Lippe als Druckstück ausgeführt ist und der andere Ventilkörper als Druckstück einen elastomeren Belag besitzt, welcher flächig durch einen Träger abgestützt wird. Die unterschiedliche Nachgiebigkeit des Elastomerkegels gegenüber einem Metallkegel mit einem flächig aufliegenden elastomeren Belag wird dadurch erreicht, daß nur der von der Befestigungsstelle, d.h. dem Wulst, überkragende, biegeelastische Teil der Lippe auf dem zugehörigen Ventilsitz aufliegt. Die Kegelgeometrie der Ventilkörper hat außerdem den Vorteil, daß ein hoher Gasfluß bei vergleichsweise kleinem Öffnungsweg dosierbar ist und Haftreibungskräfte zwischen Ventilkörper und Ventilsitz teilweise durch eine Injektorwirkung bei der Gasdosierung ausgeglichen werden.

In einer weiteren zweckmäßigen Ausgestaltung ist der obere/untere Ventilsitz als eine nachgiebige elastomere Ventillippe und der untere/obere Ventilsitz als ein elastomerer Ventilkragen ausgeführt. Die zugehörigen Ventilkörper können ebenfalls als nachgiebige Ventilkörper, oder als feste Metall- oder Kunststoffkegel ausgeführt sein. Durch die Elastizität der Ventillippe bzw. des Ventilkragens wird die auf die Ventilkörper wirkende Schließkraft noch durch den im Druckraum herrschenden Versorgungsdruck unterstützt.

Eine weitere vorteilhafte Lösung der Aufgabe besteht darin, daß zumindestens ein Ventilkörper und/oder ein Ventilsitz ein den Abstand der Ventilkörper und/oder der Ventilsitze zueinander veränderndes Justiermittel besitzt.

In zweckmäßiger Weise ist das Justiermittel als eine den unteren Ventilsitz oder den oberen Ventilsitz aufnehmende Justierschraube ausgeführt.

Eine zweckmäßige Verwendung des erfindungsgemäßen Ventils besteht darin, es als Dosierventil an einem Lungenautomaten einzusetzen, wobei z.B. der untere Ventilkörper durch einen mit einer Steuermembran des Lungenautomaten verbundenen Steuerhebel in Öffnungsstellung bringbar ist.

Das erfindungsgemäße Ventil zeichnet sich durch besonders gute Dichtigkeit eine geringe Schließkraft und durch eine kleine Öffnungskraft aus, wobei die Öffnungskraft auch auf die geringe Reibung zwischen den Ventilkörpern und den Ventilsitzen zurückzuführen ist. Die Reibung wird bei kegelförmigen Ventilkörpern auch noch durch die bei der Gasdosierung wirkenden Injektorkräfte reduziert.

Ausführungsbeispiele der Erfindung sind in den Zeichnungen dargestellt und im folgenden näher erläutert.

Es zeigen:
- Figur 1: ein erstes Ventil im Längsschnitt,
- Figur 2: ein zweites Ventil im Längsschnitt,

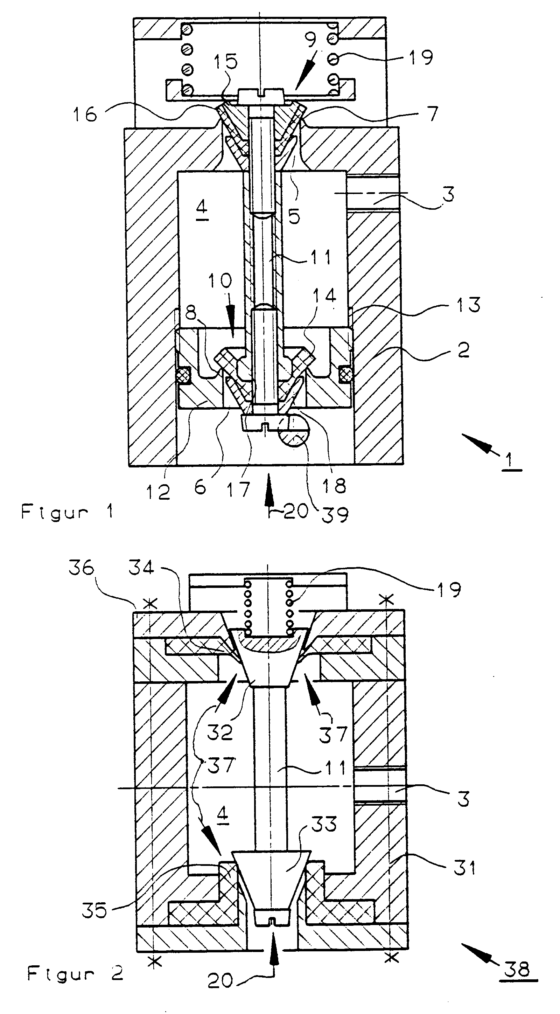

Figur 1 zeigt ein erstes Ventil (1) mit einem ersten Ventilgehäuse (2), welches eine Zufuhröffnung (3) für Druckgas besitzt. Durch die Innenfläche des ersten Ventilgehäuses (2) wird ein vom Druckgas beaufschlagter Druckraum (4) gebildet, aus welchem das Druckgas über eine obere Ausgangsöffnung (5) und eine untere Ausgangsöffnung (6) abströmen kann. An der oberen Ausgangsöffnung (5) befindet sich ein oberer Ventilsitz (7) und an der unteren Ausgangsöffnung (6) ein unterer Ventilsitz (8), auf denen jeweils ein oberer Ventilkegel (9) als oberer Ventilkörper und ein Elastomerkegel (10) als unterer Ventilkörper aufliegen.

Die Ventilsitze (7, 8) mit dem oberen Ventilkegel (9) und dem Elastomerkegel (10) sind im ersten Ventilgehäuse (2) gegenüberliegend gleichsinnig angeordnet und der obere Ventilkegel (9) ist mit dem Elastomerkegel (10) über eine Verbindungsstange (11) verbunden. Der untere Ventilsitz (8) befindet sich an einer Justierschraube (12), welche in ein Gewinde (13) im ersten Ventilgehäuse (2) einschraubbar ist. Der obere Ventilkegel (9) besitzt einen kegelförmigen Träger (15), der mit einem elastomeren Belag (16) versehen ist. Der Elastomerkegel (10) besteht aus einer kegelförmigen Lippe (14), welche kragarmartig auf einem Wulst (17) mittels einer Spannhülse (18) befestigt ist. Bei Auflage des Elastomerkegels (10) auf dem unteren Ventilsitz (8) liegt der den Wulst (17) überkragende Teil der Lippe (14) auf dem unteren Ventilsitz (8) auf.

Mittels einer die Schließkraft erzeugenden Feder (19), die an dem oberen Ventilkegel (9) angreift, werden der obere Ventilkegel (9) und über die Verbindungsstange (11), der Elastomerkegel (10) in der statischen Ruhelage auf den zugehörigen Ventilsitzen (7, 8) fixiert. Die in der statischen Ruhelage wirkende Schließkraft ist durch die Federsteifigkeit der Feder (19) veränderbar; d.h. in Abhängigkeit von der gewählten Ausführung der Ventilkörper und der Ventilsitze ist unter Berücksichtigung des im Druckraum (4) wirksamen Vordruckes die Schließkraft der Feder (19) so auszulegen, daß gerade kein Leckagefluß eintritt.

Im Betrieb ist der Druckraum (4) über die Zufuhröffnung (3) an eine in der Figur 1 nicht dargestellte Druckgasquelle angeschlossen, wodurch entgegengesetzt gerichtete Druckkräfte auf den oberen Ventilkegel (9) und den Elastomerkegel (10) einwirken, die bei Flächengleichheit von oberer Ausgangsöffnung (5) und unterer Ausgangsöffnung (6) im Gleichgewicht stehen, d.h. es liegt eine vollständige Vordruckkompensation vor.

Durch die zwischen dem oberen Ventilkegel (9) und oberen Ventilsitz (7) einerseits und zwischen dem Elastomerkegel (10) und dem unteren Ventilsitz (8) andererseits befindlichen Verformungszonen in Form des elastomeren Belags (16) und der Lippe (14) als Druckstücke von unterschiedlicher Nachgiebigkeit, wird das Passungsspiel der Doppel-Ventilkegelanordnung ausgeglichen. Die unterschiedliche Nachgiebigkeit wird dadurch erreicht, daß am oberen Ventilkegel (9) der Belag (16) flächig durch den Träger (15) abgestützt wird, während am Elastomerkegel (10) die Lippe (14) biegeelastisch auf dem unteren Ventilsitz (8) aufliegt. Mittels der Justierschraube (12) kann zusätzlich eine Voreinstellung der Ventilsitze (7, 8) zueinander vorgenommen werden. Die Öffnungsstellung des ersten Ventils (1) wird durch Drehung eines halbkreisförmig abgeflachten Lagerzapfens (39) erreicht, der Teil eines in der Figur 1 nicht dargestellten Steuerhebels ist. Der Elastomerkegel (10) wird hierbei längs eines Pfeils (20) verschoben. Beim Übergang von der Schließ- in die Öffnungsstellung muß im wesentlichen die Schließkraft der Feder (19) überwunden werden.

Die besonderen Vorteile des erfindungsgemäßen ersten Ventils (1) liegen in der Kombination einer hohen Dichtigkeit und geringen Schließkraft durch die unterschiedliche Nachgiebigkeit der Kegel (9, 10) und geringe Öffnungskraft durch kleine Reibung zwischen den Kegeln (9, 10) und den Ventilsitzen (7, 8), aufgrund der linienförmigen Berührflächen und einer die Öffnungsbewegung unterstützenden Injektorwirkung bei der Gasdosierung. Versuche haben gezeigt, daß ein derartiges Ventil besonders vorteilhaft als Dosierventil bei einem Lungenautomaten eingesetzt werden kann, da hier ein Betätigen des Ventils bei geringen Öffnungs- und Schließkräften und eine hohe Dichtigkeit gefordert werden.

Bei dem in der Figur 2 dargestellten Ausführungsbeispiel eines zweiten Ventils (38) sind in einem zweiten Ventilgehäuse (31) ein oberer Metallkegel (32) als oberer Ventilkörper und ein unterer Metallkegel (33) als unterer Ventilkörper angeordnet, welche auf einer elastomeren Ventillippe (34) als oberem Ventilsitz und einem elastomeren Ventilkragen (35) als unterem Ventilsitz zur Anlage kommen.

Gleiche Komponenten sind mit gleichen Bezugsziffern der Figur 1 bezeichnet. Die Ventillippe (34) ist mittels einer Spannplatte (36) in der Weise am zweiten Ventilgehäuse (31) befestigt, daß nur der zur Mitte weisende Rand der in die obere Ausgangsöffnung (5) weisende Teil der Ventillippe (34) elastisch verformbar ist. Die Metallkegel (32, 33) sind mittels der Verbindungsstange (11) starr miteinander verbunden.

Gegenüber dem Ausführungsbeispiel nach der Figur 1 ist unterschiedlich, daß hier die Ventilsitze wie Ventillippe (34) und in gewissem Umfang auch der Ventilkragen (35) als nachgiebig ausgeführt sind. Unter Wirkung des im Druckraum (4) herrschenden Druckes werden die Ventillippe (34) und der Ventilkragen gegen die Metallkegel (32, 33) angedrückt, wodurch die Schließkraft unterstützt und die Dichtigkeit noch zusätzlich verbessert wird. Das Passungsspiel wird bei dem Ausführungsbeispiel nach der Figur 2 im wesentlichen durch die Elastizität der Ventillippe (34) ausgeglichen. Die im Druckraum (4) wirksamen Druckkräfte sind mittels der Pfeile (37) veranschaulicht. Die Dosierung von Druckgas erfolgt durch Druck auf den unteren Metallkegel (33) längs des Pfeils (20).

## Patentansprüche

1. Ventil (1; 38) mit Druckkompensation, über zwei an einer Verbindungsstange (11) gleichsinning angeordnete Ventilkörper (9, 10; 32, 33) in einem Ventilgehäuse (2; 31), mit Ausgangsöffnungen (5, 6) im Ventilgehäuse und flanschartigen Ventilsitzen (7, 8; 34, 35) an den Ausgangsöffnungen, auf welchen die Ventilkörper (9, 10; 32, 33) in gleicher Richtung in Schließstellung über Verformungszonen aufliegen und mit einem von den Ventilkörpern und der Innenfläche des Ventilgehäuses umschlossenen Druckraum (4), dadurch gekennzeichnet, daß die an den Berührstellen zwischen oberem Ventilkörper (9, 32) und oberem Ventilsitz (7, 34) einerseits und unterem Ventilkörper (10, 33) und unterem Ventilsitz (8, 35) andererseits befindlichen Verformungszonen als der Schließkraft unterschiedlich nachgebende Druckstücke (14, 16, 34, 35) ausgeführt sind.

2. Ventil nach Anspruch 1, dadurch gekennzeichnet, daß einer der Ventilkörper als ein Elastomerkegel (10) mit einer kragarmförmig befestigten Lippe (14) als Druckstück ausgeführt ist, und der andere Ventilkörper als Druckstück einen elastomeren Belag (16) besitzt, welcher flächig durch einen Träger (15) abgestützt ist.

3. Ventil nach Anspruch 1, dadurch gekennzeichnet, daß der obere/untere Ventilsitz als eine elastomere Ventillippe (34) und der untere/obere Ventilsitz als ein elastomerer Ventilkragen (35) ausgebildet sind, welche die Druckstücke bilden.

4. Ventil nach einem der Ansprüche 1 bis 3, dadurch gekennzeichnet, daß zumindest ein Ventilkörper (9, 10, 32, 33) und/oder ein Ventilsitz (7, 8, 34, 35) ein den Abstand der Ventilkörper (9, 10, 32, 33) und/oder der Ventilsitze (7, 8, 34, 35) zueinander veränderndes Justiermittel (12) besitzt.

5. Ventil nach Anspruch 4, dadurch gekennzeichnet, daß das Justiermittel eine den unteren Ventilsitz (8) und/oder den oberen Ventilsitz aufnehmende Justierschraube (12) ist.

6. Lungenautomat mit einem Ventil nach einem der Ansprüche 1 bis 5, dadurch gekennzeichnet, daß der untere Ventilkörper (10, 33) oder der obere Ventilkörper (9, 32) durch einen mit einer Steuermembran des Lungenautomaten verbundenen Steuerhebel in Öffnungsstellung bringbar ist.

## Claims

1. Valve (1; 38) with pressure compensation, by way of two valve bodies (9, 10; 32, 33) in a valve housing (2; 31) that are arranged in the same direction on a connecting rod (11), having exit openings (5, 6) in the valve housing and flange-like valve seats (7, 8; 34, 35) at the exit openings, on which valve seats the valve bodies (9, 10; 32, 33) rest in the same direction in the closed position via deformation zones, and having a pressure chamber (4) which is enclosed by the valve bodies and the inner surface of the valve housing, characterised in that the deformation zones, which are located at the contact points between the upper valve body (9; 32) and the upper valve seat (7; 34) on the one hand and between the lower valve body (10; 33) and the lower valve seat (8; 35) on the other hand, are constructed as pressure pieces (14, 16; 34, 35) which give way differently to the closing force.

2. Valve according to claim 1, characterised in that one of the valve bodies is constructed as an elastomer cone (10) having as a pressure piece a lip (14) which is secured in a cantilever-like manner, and the other valve body has as a pressure piece an elastomeric coat (16), which is supported areally by a carrier (15).

3. Valve according to claim 1, characterised in that the upper/lower valve seat is constructed as an elastomeric valve lip (34) and the lower/upper valve seat is constructed as an elastomeric valve collar (35), which valve lip and valve collar form the pressure pieces.

4. Valve according to one of the claims 1 to 3, characterised in that at least one valve body (9, 10; 32, 33) and/or one valve seat (7, 8; 34, 35) has an adjusting means (12) which alters the distance of the valve bodies (9, 10; 32, 33) and/or the valve seats (7, 8; 34, 35) with respect to each other.

5. Valve according to claim 4, characterised in that the adjusting means is an adjusting screw (12) which accommodates the lower valve seat (8) and/or the upper valve seat.

6. Automatic lung machine having a valve according to one of the claims 1 to 5, characterised in that the lower valve body (10; 33) or the upper valve body (9; 32) can be brought into the opened position by a control lever which is connected to a control membrane of the automatic lung machine.

## Revendications

1. Soupape (1 ; 38) avec compensation de pression, par deux corps de soupape (9, 10 ; 32, 33), disposés dans le même sens sur une tringle de liaison (11), dans un boîtier de soupape (2 ; 31), avec des orifices de sortie (5, 6) dans le boîtier de soupape et des sièges de soupape (7, 8 ; 34, 35) en forme de brides sur les orifices de sortie, sur lesquels les corps de soupape (9, 10 ; 32, 33) reposent dans le même sens en position de fermeture, par des zones de déformation et avec un volume de pression (4) entouré par les corps de soupape et la face intérieure du boîtier de soupape, caractérisée en ce que les zones de déformation se trouvant aux points de contact entre le corps de soupape supérieur (9, 32) et le siège de soupape supérieur (7, 34) d'une part et le corps de soupape inférieur (10, 33) et le siège de soupape inférieur (8, 35) d'autre part, sont réalisées en tant que pièces de pression (14, 16, 34, 35) cédant différemment à la force de fermeture.

2. Soupape selon la revendication 1, caractérisée en ce que l'un des corps de soupape est réalisé en tant que cône en élastomère (10) avec une lèvre (14) fixée en forme de bras en porte-à-faux, en tant que pièce de pression, et l'autre corps de soupape possède, en tant que pièce de pression, une garniture élastomère (16), qui est soutenue à plat par un support (15).

3. Soupape selon la revendication 1, caractérisée en ce que le siège de soupape supérieur/inférieur est configuré en lèvre de soupape (34) élastomère et le siège de soupape inférieur/supérieur est réalisé en collet de soupape (35) élastomère, qui forment les pièces de pression.

4. Soupape selon l'une des revendications 1 à 3, caractérisée en ce qu'au moins un corps de soupape (9, 10 ; 32, 33) et/ou un siège de soupape (7, 8 ; 34, 35) possède un moyen d'ajustage modifiant la distance des corps de soupape (9, 10 ; 32, 33) et/ou des sièges de soupape (7, 8 ; 34, 35) l'un par rapport à l'autre.

5. Soupape selon la revendication 4, caractérisée en ce que le moyen d'ajustage est une vis d'ajustage (12) logeant le siège de soupape inférieur (8) et/ou le siège de soupape supérieur.

6. Automate pulmonaire avec un soupape selon l'une des revendications 1 à 5, caractérisé en ce que le corps de soupape inférieur (10, 33) ou le corps de soupape supérieur (9, 32) peut être amené en position d'ouverture par un levier de commande relié à une membrane de commande de l'automate pulmonaire.
